# EUROPEAN PATENT SPECIFICATION

(11) **EP 3 418 200 B1**
(45) Date of publication and mention of the grant of the patent: **05.08.2020**
(21) Application number: 18179003.1
(22) Date of filing: 21.06.2018
(51) Int. Cl.: B64D 37/32, A62C 3/06

(54) **CATALYTIC OXIDATION PRODUCT GAS MANAGEMENT**
KATALYTISCHES OXIDATIONSPRODUKTGASMANAGEMENT
GESTION DE GAZ DE PRODUIT D'OXYDATION CATALYTIQUE

(30) Priority: 21.06.2017 US 201715629367
(43) Date of publication of application: 26.12.2018
(73) Proprietor: Hamilton Sundstrand Corporation, Charlotte, NC 28217-4578 (US)
(72) Inventor: RHEAUME, Jonathan, West Hartford, CT Connecticut 06119 (US); EMERSON, Sean C., Broad Brook, CT Connecticut 06016 (US)
(74) Representative: Dehns

(56) References cited:
- WO-A1-2016/118192
- GB-A- 2 374 007
- US-A1- 2008 099 618
- US-A1- 2008 128 048
- US-A1- 2009 302 163

## Description

### BACKGROUND

This disclosure relates to air inerting systems for aircraft and other applications where inert gas may be required, such as oil tankers, and more specifically to a catalytic oxidation method of inert air management.

Aircraft fuel tanks and containers can contain potentially combustible combinations of oxygen, fuel vapors, and ignition sources. In order to prevent combustion and explosions, the ullage of fuel tanks and containers is filled with inert air containing less than 12% oxygen. Conventional fuel tank inerting (FTI) methods include air separation module (ASM) methods that separate ambient air into nitrogen-enriched air, which is directed to fuel tanks and to locations needing inert gas, such as fire suppression systems and oxygen-enriched air, which is rejected overboard. But ASM methods rely on bleed air from a compressor stage of an engine which is not always available in the desired quantity at sufficient pressure to meet pneumatic loads as aircraft engines idle during descent. An inerting system is described in GB 2 374 007.

### SUMMARY

An inerting system is provided as defined by claim 1.

A method is provided as defined by claim 8.

### BRIEF DESCRIPTION OF THE DRAWINGS

FIG. 1 is a schematic diagram of a fuel tank inerting system in aircraft.
FIG. 2 a schematic diagram of a fuel tank inerting system in aircraft in an embodiment that includes a cooling air line and heat source.

### DETAILED DESCRIPTION

Catalytic oxidation of fuel is an alternative to traditional air separation modules (ASM) to produce inert air onboard an aircraft for uses such as fuel tank inerting (FTI) and fire suppression. Catalytic oxidation of fuel can leverage a variety of incoming air sources and does not require bleed air, but can still produce inert air with oxygen levels below the required 12% oxygen over a range of conditions.

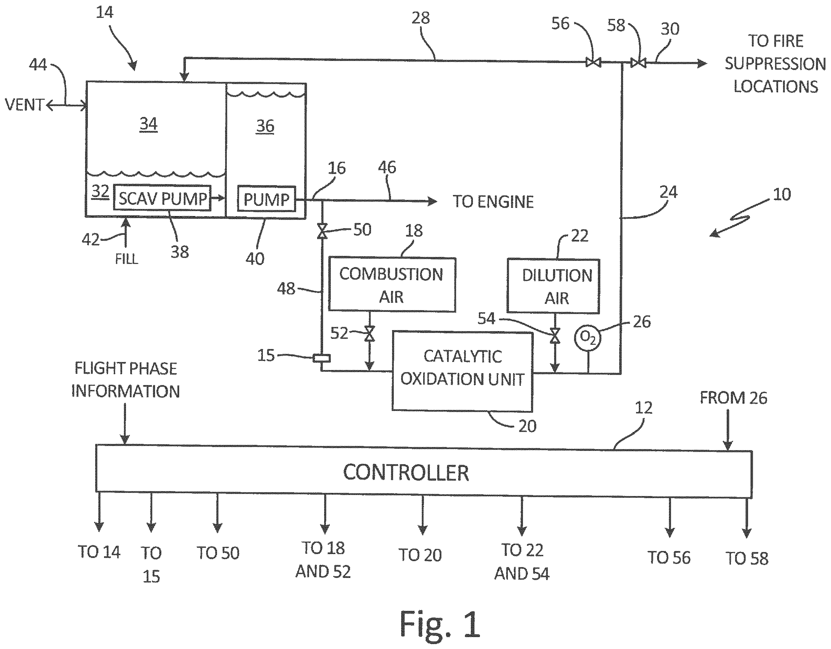

FIG. 1 is a schematic diagram of fuel tank inerting system 10 in an aircraft. Fuel tank inerting system 10 includes controller 12, fuel tank 14, fuel supply line 16, combustion air source 18, catalytic oxidation unit 20, dilution air source 22, inert air supply line 24, oxygen sensor 26, and distribution lines 28, 30. Controller 12 controls fuel and air entering catalytic oxidation unit 20 from fuel tank 14, combustion air source 18, catalytic oxidation unit 20, and dilution air source 22 based on sensed oxygen concentration information from oxygen sensor 26 and flight phase information.

Controller 12 is operatively coupled (e.g., electrically and/or communicatively) to components as depicted in FIG. 1 to send and/or receive data to control operation of these components. Controller device 12 can include one or more processors and computer-readable memory encoded with instructions that, when executed by the one or more processors, cause controller device 12 to operate in accordance with techniques described herein. Examples of the one or more processors include any one or more of a microprocessor, a digital signal processor (DSP), an application specific integrated circuit (ASIC), a field-programmable gate array (FPGA), or other equivalent discrete or integrated logic circuitry. Computer-readable memory of controller device 12 can be configured to store information within controller device 12 during operation. The computer-readable memory can be described, in some examples, as computer-readable storage media. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). Computer-readable memory of controller device 12 can include volatile and non-volatile memories. Examples of volatile memories can include random access memories (RAM), dynamic random access memories (DRAM), static random access memories (SRAM), and other forms of volatile memories. Examples of non-volatile memories can include magnetic hard discs, optical discs, floppy discs, flash memories, or forms of electrically programmable memories (EPROM) or electrically erasable and programmable (EEPROM) memories. Controller 12 can be a stand-alone device dedicated to the operation of the catalytic oxidation unit, or it can be integrated with another controller.

Fuel tank 14 includes main compartment 32 with ullage 34, optionally secondary compartment 36, scavenge pump 38, feed pump 40, fill port 42, and vent 44. Fuel tank 14 holds fuel for the aircraft. Fuel is supplied to fuel tank 14 through fill port 42, and air is allowed to vent through vent 44. Fuel is transferred from main compartment 32 to an engine of the aircraft through pumps 38 and 40. Pumps 38 and 40 are regulated by a controller which may be integrated with controller 12. Specifically, scavenge pump 38 feeds fuel into secondary compartment 36. The controller for pumps 38, 40, can be a FADEC (Full Authority Digital Engine Control) also used to control an aircraft engine. In one embodiment, a small amount of fuel is transferred through fuel supply line 16 to catalytic oxidation unit 20. Alternatively, a line dedicated to transporting fuel from fuel tank 14 towards catalytic oxidation unit 20 may be used. Fuel travelling to catalytic oxidation unit 20 from second compartment 36 is vaporized or atomized by vaporizer or atomizer 15 prior to flowing down fuel supply line 16. Vaporizer/atomizer 15 is located upstream of catalytic oxidation unit 20 such that atomized fuel enters catalytic oxidation unit in a vaporized or atomized state instead of in a liquid state.

Fuel supply line 16 connects fuel tank 14 to catalytic oxidation unit 20. Fuel supply line 16 receives fuel from fuel tank 14 through secondary compartment 36, and feed pump 40 that directs fuel to fuel supply line 16. Fuel supply line 16 directs the majority of fuel to fuel outlet line 46, where fuel is directed to an aircraft engine, but directs a portion of fuel down feed line 48. Controller 12 directs actuated valve 50 to flow a portion of fuel in fuel supply line 16 to feed line 48 towards catalytic oxidation unit 20. Fuel directed by fuel supply line 16 can be vaporized or atomized by vaporizer or atomizer 15 prior to flowing towards catalytic oxidation unit 20 if fuel in fuel supply line 16 is not already in gaseous form.

Combustion air source 18 provides air to mix with fuel conveyed by feed line 48 prior to the fuel reaching catalytic oxidation unit 20. The amount of air mixing with fuel is controlled by controller 12 through combustion air line valve 52. Fuel and air together enter catalytic oxidation unit 20 where the fuel and air are combusted to create inert air. Air supplied by combustion air source 18 can be fan bleed air, ram air, cabin outflow air, or air from other appropriate sources.

Catalytic oxidation unit 20 contains a catalyst such as a noble metal, transition metal, a metal oxide, or a combination thereof. The catalyst in catalytic oxidation unit 38 facilitates oxidation of incoming fuel and air, converting hydrocarbons in the fuel and oxygen and nitrogen in air into inert air containing carbon dioxide, water vapor and nitrogen. For a stoichiometric mixture of fuel and air, this has a general formula of:

CₓH_{y} + (x+y/4)O₂ + N₂ → xCO₂ + (y/2)H₂O + N₂

The exact reactions depend on the type of fuel used and types of hydrocarbons present in the fuel mixture. In catalytic oxidation unit 20, oxygen and hydrocarbons are consumed in the reactions, and inert air exits catalytic oxidation unit 20 through one outlet.

Regulating amounts of air and fuel entering catalytic oxidation unit 20 affects the reactions occurring inside catalytic oxidation unit 20. The air-to-fuel ratio entering catalytic oxidation unit 20 affects temperature of the resulting inert air. Typically, catalytically produced inert gases have a temperature range between 150° C and 1500° C. Adding excess air to the mixture entering catalytic conversion unit 20 (or decreasing the amount of fuel, resulting in a "lean" condition with a high air-to-fuel ratio) results in oxygen and nitrogen gases absorbing heat from the combustion reaction and an ultimately lower gas temperature. The amount of fuel and air entering unit 20 can be regulated by controller 12.

Moreover, a mixture of near stoichiometric proportions may be needed to facilitate rapid kinetics of the catalytic oxidation reactions. Near stoichiometric proportions can result in nearly complete conversion of oxygen so that the product gas exiting the product side of catalytic oxidation unit 20 contains little to no oxygen.

A fuel-rich condition in which a lack of air (thus, a lack of oxygen) enters catalytic oxidation unit 20 can result in incomplete combustion. In this case, the product gas is not inert but rather can be flammable. Carbon monoxide instead of carbon dioxide, in addition to hydrogen and unburned fuel species, may exit the reactor. Thus, greater than near stoichiometric proportions or fuel-lean conditions are preferred to create inert air with carbon dioxide, water vapor, nitrogen, and an acceptable amount of oxygen, rather than carbon monoxide and possibly hydrogen and unburned fuel species.

The acceptable amount of oxygen depends on the application of the resulting gas. In the case of commercial aircraft, less than 12% oxygen by volume is required according to aviation regulations governing fuel tank system flammability, or under 9% oxygen for military vehicles. This can be achieved by running at a relative oxygen to fuel ratio (lambda) between 1.5 and 2.0, where a lambda of 1.0 represents the stoichiometric ratio of oxygen to fuel described by the formula above, and values greater than 1.0 represent fuel-lean mixtures. Thus, a ratio of at least 1.0 is preferred.

The amount of oxygen in the resulting inert airstream can also be regulated through dilution of the inert air with excess air after the inert air has left catalytic oxidation unit 20. This can be done to lower the temperature of inert air leaving catalytic oxidation unit 20 through inert air supply line 24, in addition to increasing the amount of inert gas flow for a given quantity of fuel consumed by the reactor. This is particularly useful when the fuel to air ratio entering catalytic oxidation unit 20 is close to stoichiometric, thus, the kinetics of the reaction proceed at an acceptable rate, but the inert air exiting catalytic oxidation unit 20 is at a high temperature.

Dilution air can be added to inert air supply line 24 from dilution air source 22. The amount of air added from dilution air source 22 is regulated by controller 12 and valve 54. If inert air exiting unit 20 is for fuel tank inerting, dilution air source 22 can transfer air from ram air, cabin outflow air, fan bleed air, compressor stage bleed air, compressed air from an auxiliary power unit, or other appropriate sources of air. If inert air exiting unit 20 is for fire suppression in a fuselage which is normally pressurized during flight, product inert gas entering inert air supply line 24 must be pressurized. In this case, a fan or compressor air may be used to pressurize the inert gas. Alternatively, the fuel, combustion air 18, and dilution air 22 can be individually pressurized. In contrast, aircraft engine fire suppression does not require substantial pressurization.

Oxygen sensor 26 is downstream of catalytic oxidation unit 20. Oxygen sensor 26 determines the proportion of oxygen exiting catalytic oxidation unit 20. Oxygen should be less than 12% of inert air exiting catalytic oxidation unit 20, and ideally less than 10% for fuel tank inerting. For fire suppression purposes in an aircraft cargo hold, the oxygen content may be adjusted to provide a sufficient partial pressure of oxygen (i.e., 21.3 kPa or 3.1 psia) for biocompatibility of pets and livestock.

Volumetric (molar) fractions of nitrogen, carbon dioxide, and water vapor exiting catalytic oxidation unit 20 depend on the hydrocarbons present in the fuel and the ratio of air-to-fuel used in catalytic oxidation unit 20. For example, if kerosene is combusted at a stoichiometric ratio, the resulting inert air will be about approximately one half nitrogen, one quarter carbon dioxide, and one quarter water vapor. Alternatively, measuring the composition of air and fuel entering catalytic oxidation unit 20 can be used to calculate the composition of inert air, including a portion of oxygen. Data from oxygen sensor 26 is sent to controller 12. Controller 12 adjusts amounts of fuel, combustion air, and dilution air accordingly. The amount of dilution air may be limited by kinetics of combustion within the reactor; as a result, a combination of excess combustion air 18 and dilution air 22 may be used to achieve product gas with the desired oxygen content.

Once inert air exits catalytic oxidation unit 20 through inert air supply line 24, passing through oxygen sensor 26, inert air is routed to values 56 and 58. Valves 56 and 58 direct inert air to a location requiring inerting based on commands from controller 12. For instance, in FIG. 1, valve 56 can direct inert air-to-fuel tank 14 through distribution line 28 where inert air is used in ullage 34 to inert fuel tank 14. A water vapor removal system (not pictured) that prevents humidity from entering fuel tank 14 can be used in conjunction with system 10. Water in fuel tanks can cause numerous problems including degrading fuel quality, freezing and occluding fuel system passages, and feeding microbes that digest fuel to form sludge and acidic waste products. Alternatively, valve 58 can direct inert air down distribution line 30, which can be, for example, to a fire suppression system. Use of inert air in a fire suppression system in the fuselage may also require pressurization of inert air by use of a fan or compressor (not pictured).

Jet fuel can contain sulfur compounds (sulfides, thiols, thiophenes, etc.) which can reversibly poison the reaction catalyst in catalytic oxidation unit 20 by binding to active sites and reducing the active area available for promoting the oxidation reactions. After a period of use of system 10, catalytic oxidation unit 20 may need to be regenerated. Catalysts can be regenerated by running an oxygen-containing gas stream through unit 20 without fuel. This causes desorption of sulfur species and oxidizes any surface contaminants on the catalyst's surface. However, care should be taken to avoid overheating or sintering the catalyst, causing damage to active catalyst surface sites. Thus, a preferable method of regeneration uses a low concentration oxygen gas, such as gas drawn from an inerted fuel tank ullage 34. Regeneration can occur on-board or off-board of the aircraft.

Thus, system 10 can be used for inerting purposes on aircraft. The use of system 10 can vary depending on flight phase during aircraft operation. At the top of aircraft descent, ullage 34 of fuel tank 14 should be as depleted of oxygen as possible to counteract an inrush of ambient air through vent 44 of fuel tank 14 during descent. Operation of catalytic oxidation unit 20 with near stoichiometric fuel and air ratios would result in an inert air completely depleted of oxygen appropriate for this phase of aircraft operation. An ambient air heat sink can be used to counteract heat generated from catalytic oxidation unit 20.

During descent, when an inrush of ambient air through vent 44 occurs, catalytic oxidation unit 20 can be operated to generate a large quantity of inert air to counteract the inrush of ambient air. Excess nitrogen and oxygen in catalytic oxidation unit 20 absorb heat and thereby lower temperatures in the resulting inert air stream.

On the ground and during climb-out, catalytic oxidation unit 20 can be run with the air sufficient to completely combust fuel. The proportion of fuel and air can be near stoichiometric or fuel-lean with preference for lean to economize fuel. During ascent, for commercial aircraft, ullage gases leave vented fuel tanks due to the pressure difference with the outside air. Less inert air is required for ullage 34, and system 10 can operate with a lower air-to-fuel ratio. Finally, during cruise, excess air can be used in system 10 to reduce fuel burn and cooling requirements.

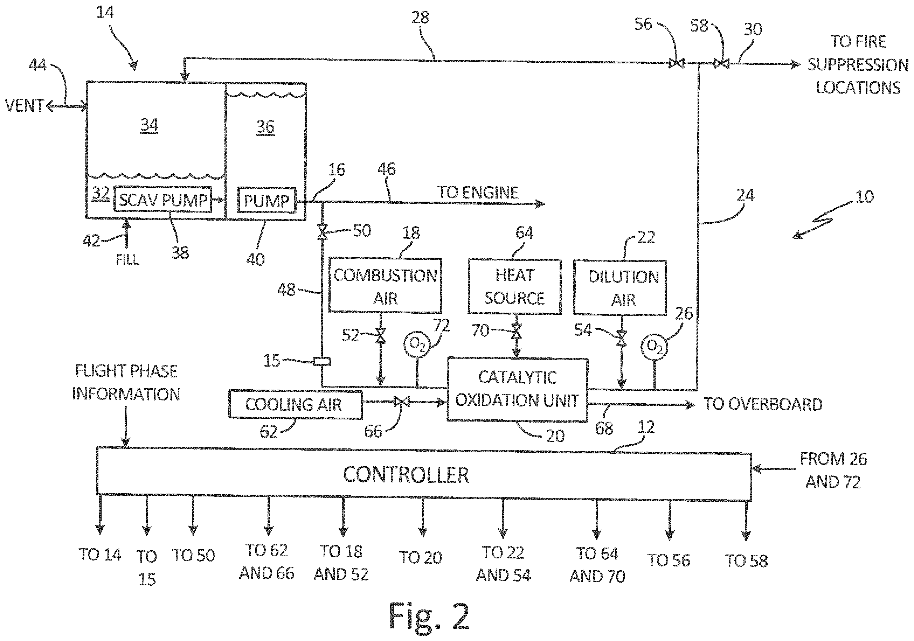

FIG. 2 is a schematic diagram of fuel tank inerting system 60 in aircraft. System 60 is similar to system 10 of FIG. 1 and contains the same components, except where expressly discussed below. In addition to the components discussed earlier, fuel tank inerting system 60 includes cooling air source 62, heat source 64, and inlet oxygen sensor 72.

Cooling air source 62 is connected to catalytic oxidation unit 20 and delivers cooling fluid to catalytic oxidation unit 20. Cooling fluid does not mix with fuel or air undergoing combustion in catalytic oxidation unit 20. Instead, cooling fluid runs across catalytic oxidation unit 20 for temperature control. In one embodiment, catalyst is loaded into alternating layers of a heat exchanger such as a plate-fin heat exchanger. The non-catalyst-containing layers are for the flow of a heat transfer fluid such as ram air. The amount of cooling fluid from cooling fluid source 62 is controlled by cooling fluid valve 66 and controller 12. Cooling fluid exits catalytic oxidation unit 20 through outlet 68, which can go overboard or to another location.

Heat source 64 is connected to catalytic oxidation unit 20 to further temperature regulate catalytic oxidation unit 20. Heat source 64 is connected to provide a startup mechanism for reactions occurring inside catalytic oxidation unit 20, driving kinetics of the reactions discussed in reference to FIG. 1. The heating source 64 may be a resistance heater or other suitable embodiment. Controller 12 regulates heat provided by heat source 64 through valve 70. Heat can also be added to catalytic oxidation unit 20 by flowing heated fluid such as bleed air in lieu of cooling air 62. Inlet oxygen sensor 72 provides additional oxygen content detection, and functions similarly to oxygen sensor 26. Inlet oxygen sensor 72 determines the proportion of oxygen entering catalytic oxidation unit 20.This allows for manipulation of oxygen to fuel ratio entering catalytic oxidation unit 20. In particular, oxygen sensor 72 can be leveraged when regenerating catalytic oxidation unit 20.

The proposed inerting system has several benefits. First, as discussed in reference to FIG. 1 and the various stages of aircraft flights, inerting of a fuel tank can be tailored according to aircraft needs. Additionally, this system reduces fuel consumption and cooling needs in the aircraft. The catalytic oxidation unit itself is small in volume, and regenerating of a catalyst allows for it to be repeatedly used and renewed with ease. This results in lower maintenance times and costs.

### Discussion of Possible Embodiments

The following are non-exclusive descriptions of possible embodiments of the present invention.

An inerting system includes a fuel source configured to transfer fuel into a fuel supply line, a combustion air source configured to supply combustion air to mix with the fuel, a catalytic oxidation unit configured to receive the fuel from the fuel source and the combustion air from the combustion air source, to convert the fuel and the combustion air to inert air, and to deliver the inert air to an inert air supply line, an oxygen sensor connected to the inert air supply line downstream of the catalytic oxidation unit, the oxygen sensor configured to produce a sensor signal representing a concentration of oxygen in the inert air, a controller configured to control flow of the combustion air and the fuel into the catalytic oxidation unit as a function of the sensor signal from the oxygen sensor representing the concentration of oxygen in the inert air in the inert air supply line; and a location requiring inert air downstream of the oxygen sensor, the location configured to receive the inert air.

The system of the preceding paragraph can optionally include, additionally and/or alternatively, any one or more of the following features, configurations and/or additional components:

The system includes a dilution air source connected to the inert air supply line downstream of the catalytic oxidation unit, wherein the controller is configured to insert dilution air from the dilution air source into the inert air as a function of the sensor signal from the oxygen sensor.

A ratio of the combustion air to the fuel entering the catalytic oxidation unit is near stoichiometric.

The combustion air entering the catalytic oxidation unit is in excess.

A ratio of the combustion air to the fuel entering the catalytic oxidation unit is at a relative stoichiometric ratio of oxygen to fuel between 1.5 and 2.0.

The inert air contains less than 12% oxygen.

The inert air contains less than 9% oxygen.

The inert air has a partial pressure of oxygen of at least 21.3 kPa.

The catalytic oxidation unit contains a catalyst selected from the group consisting of noble metals, transition metals, metal oxides, and combinations thereof.

The catalyst can be regenerated by running a low concentration oxygen-containing gas across the catalytic oxidation unit without fuel.

The system includes a cooling fluid source connected to the catalytic oxidation unit, the cooling fluid source configured to regulate temperature of the catalytic oxidation unit.

The system includes a heat source connected to the catalytic oxidation unit, the heat source configured to regulate temperature of the catalytic oxidation unit.

A method includes flowing fuel from a fuel source to a catalytic oxidation unit and flowing combustion air from a combustion air source into the catalytic oxidation unit, oxidizing the fuel and the combustion air in the catalytic oxidation unit to create inert air, flowing the inert air from the catalytic oxidation unit to an inert air supply line, detecting a concentration of oxygen in the inert air with an oxygen sensor, controlling flow of the combustion air and the fuel into the catalytic oxidation unit as a function of the concentration of oxygen in the inert air, and directing the inert air to a location requiring inerting.

The method of the preceding paragraph can optionally include, additionally and/or alternatively, any one or more of the following features, configurations and/or additional components:

The method includes diluting the inert air with dilution air from a dilution air source as a function of the concentration of oxygen in the inert air.

A ratio of combustion air to fuel entering the catalytic oxidation unit is near stoichiometric.

The combustion air entering the catalytic oxidation unit is in excess.

The method includes adjusting the inert gas oxygen content based on a phase of flight during the operation of an aircraft.

The method includes regenerating a catalyst of the catalytic oxidation unit by flowing an oxygen-containing gas through the catalytic oxidation unit.

The method includes regulating the temperature of the catalytic oxidation unit by flowing cooling fluid through the catalytic oxidation unit, the cooling fluid separated from the fuel and the combustion air.

The method includes regulating the temperature of the catalytic oxidation unit by connecting a heat source to the catalytic oxidation unit.

While the invention has been described with reference to an exemplary embodiment(s), it will be understood by those skilled in the art that various changes may be made without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. An inerting system comprising:
a fuel source (14) configured to transfer fuel into a fuel supply line (16);
a combustion air source (18) configured to supply combustion air to mix with the fuel;
a catalytic oxidation unit (20) configured to receive the fuel from the fuel source and the combustion air from the combustion air source, to convert the fuel and the combustion air to inert air, and to deliver the inert air to an inert air supply line;
an oxygen sensor (26) connected to the inert air supply line downstream of the catalytic oxidation unit, the oxygen sensor configured to produce a sensor signal representing a concentration of oxygen in the inert air;
a controller (12) configured to control flow of the combustion air and the fuel into the catalytic oxidation unit as a function of the sensor signal from the oxygen sensor representing the concentration of oxygen in the inert air in the inert air supply line; **characterized by**:
a dilution air source (22) connected to the inert air supply line downstream of the catalytic oxidation unit, wherein the controller is configured to insert dilution air from the dilution air source into the inert air as a function of the sensor signal from the oxygen sensor; and
a location requiring inert air downstream of the oxygen sensor, the location configured to receive the inert air.

2. The system of claim 1, wherein a ratio of the combustion air to the fuel entering the catalytic oxidation unit is near stoichiometric.

3. The system of any preceding claim, wherein the combustion air entering the catalytic oxidation unit (20) is in excess.

4. The system of claim 3, wherein a ratio of the combustion air to the fuel entering the catalytic oxidation unit (20) is at a relative stoichiometric ratio of oxygen to fuel between 1.5 and 2.0.

5. The system of any preceding claim, wherein the inert air contains less than 12% oxygen, and preferably wherein the inert air contains less than 9% oxygen, and preferably wherein the inert air has a partial pressure of oxygen of at least 21.3 kPa.

6. The system of any preceding claim, wherein the catalytic oxidation unit (20) contains a catalyst selected from the group consisting of noble metals, transition metals, metal oxides, and combinations thereof, and preferably wherein the catalyst can be regenerated by running a low concentration oxygen-containing gas across the catalytic oxidation unit without fuel.

7. The system of any preceding claim, further comprising a cooling fluid source (62) connected to the catalytic oxidation unit, the cooling fluid source configured to regulate temperature of the catalytic oxidation unit, or further comprising a heat source (64) connected to the catalytic oxidation unit, the heat source configured to regulate temperature of the catalytic oxidation unit.

8. A method comprising:
flowing fuel from a fuel source (14) to a catalytic oxidation unit (20) and flowing combustion air from a combustion air source (18) into the catalytic oxidation unit;
oxidizing the fuel and the combustion air in the catalytic oxidation unit (20) to create inert air;
flowing the inert air from the catalytic oxidation unit to an inert air supply line;
detecting a concentration of oxygen in the inert air with an oxygen sensor (26);
controlling flow of the combustion air and the fuel into the catalytic oxidation unit as a function of the concentration of oxygen in the inert air; and
**characterized by**
controlling flow of dilution air source into the inert air supply line downstream of the catalytic oxidation unit as a function of the sensor signal from the oxygen sensor; and
directing the inert air to a location requiring inerting.

9. The method of claim 8, further comprising diluting the inert air with dilution air from a dilution air source as a function of the concentration of oxygen in the inert air.

10. The method of claim 8 or 9, wherein a ratio of combustion air to the fuel entering the catalytic oxidation unit is near stoichiometric.

11. The method of claim 8, wherein the combustion air entering the catalytic oxidation unit is in excess.

12. The method of any of claims 8 to 11, further comprising adjusting the inert gas oxygen content based on a phase of flight during the operation of an aircraft.

13. The method of claim 12, further comprising regenerating a catalyst of the catalytic oxidation unit by flowing an oxygen-containing gas through the catalytic oxidation unit.

14. The method of any of claims 8 to 13, further comprising regulating the temperature of the catalytic oxidation unit by flowing cooling fluid through the catalytic oxidation unit, the cooling fluid separated from the fuel and the combustion air, or further comprising regulating the temperature of the catalytic oxidation unit by connecting a heat source to the catalytic oxidation unit.

## Patentansprüche

1. Inertisierungssystem, umfassend:
eine Kraftstoffquelle (14), die dazu konfiguriert ist, Kraftstoff in eine Kraftstoff zuführungsleitung (16) zu befördern;
eine Verbrennungsluftquelle (18), die dazu konfiguriert ist, Verbrennungsluft bereitzustellen, die mit dem Kraftstoff gemischt wird;
eine katalytische Oxidationseinheit (20), die dazu konfiguriert ist, den Kraftstoff von der Kraftstoffquelle und die Verbrennungsluft von der Verbrennungsluftquelle aufzunehmen, den Kraftstoff und die Verbrennungsluft in inerte Luft umzuwandeln und die inerte Luft an eine Zuführungsleitung für inerte Luft zu liefern;
einen Sauerstoffsensor (26), der mit der Zuführungsleitung für inerte Luft stromabwärts der katalytischen Oxidationseinheit verbunden ist, wobei der Sauerstoffsensor dazu konfiguriert ist, ein Sensorsignal zu erzeugen, das eine Konzentration von Sauerstoff in der inerten Luft darstellt;
ein Steuergerät (12), das dazu konfiguriert ist, den Strom der Verbrennungsluft und des Kraftstoffs in die katalytische Oxidationseinheit abhängig vom Sensorsignal von dem Sauerstoffsensor, das die Konzentration von Sauerstoff in der inerten Luft in der Zuführungsleitung für inerte Luft darstellt, zu steuern; **gekennzeichnet durch**:
eine Verdünnungsluftquelle (22), die mit der Zuführungsleitung für inerte Luft stromabwärts der katalytischen Oxidationseinheit verbunden ist, wobei das Steuergerät dazu konfiguriert ist, Verdünnungsluft aus der Verdünnungsluftquelle in die inerte Luft abhängig von dem Sensorsignal von dem Sauerstoffsensor einzuführen; und
eine Position, die inerte Luft stromabwärts des Sauerstoffsensors erfordert, wobei die Position dazu konfiguriert ist, die inerte Luft aufzunehmen.

2. System nach Anspruch 1, wobei ein Verhältnis der Verbrennungsluft zu dem Kraftstoff, die in die katalytische Oxidationseinheit eintreten, nahezu stöchiometrisch ist.

3. System nach einem der vorstehenden Ansprüche, wobei die Verbrennungsluft, die in die katalytische Oxidationseinheit (20) eintritt, im Überschuss ist.

4. System nach Anspruch 3, wobei ein Verhältnis der Verbrennungsluft zu dem Kraftstoff, die in die katalytische Oxidationseinheit (20) eintreten, ein relatives stöchiometrisches Verhältnis von Sauerstoff zu Kraftstoff zwischen 1,5 und 2,0 ist.

5. System nach einem der vorstehenden Ansprüche, wobei die inerte Luft weniger als 12 % Sauerstoff enthält, und vorzugsweise wobei die inerte Luft weniger als 9 % Sauerstoff enthält, und vorzugsweise wobei die inerte Luft einen Sauerstoffpartialdruck von mindestens 21,3 kPa aufweist.

6. System nach einem der vorstehenden Ansprüche, wobei die katalytische Oxidationseinheit (20) einen Katalysator enthält, der aus der Gruppe ausgewählt ist, die aus Edelmetallen, Übergangsmetallen, Metalloxiden und Kombinationen daraus besteht, und vorzugsweise wobei der Katalysator durch Laufenlassen eines sauerstoffhaltigen Gases mit niedriger Konzentration über die katalytische Oxidationseinheit ohne Kraftstoff regeneriert werden kann.

7. System nach einem der vorstehenden Ansprüche, ferner umfassend eine Kühlmittelquelle (62), die mit der katalytischen Oxidationseinheit verbunden ist, wobei die Kühlmittelquelle dazu konfiguriert ist, eine Temperatur der katalytischen Oxidationseinheit zu regeln, oder ferner umfassend eine Wärmequelle (64), die mit der katalytischen Oxidationseinheit verbunden ist, wobei die Wärmequelle dazu konfiguriert ist, eine Temperatur der katalytischen Oxidationseinheit zu regeln.

8. Verfahren, umfassend:
Strömenlassen von Kraftstoff von einer Kraftstoffquelle (14) zu einer katalytischen Oxidationseinheit (20) und Strömenlassen von Verbrennungsluft von einer Verbrennungsluftquelle (18) in die katalytische Oxidationseinheit;
Oxidieren des Kraftstoffs und der Verbrennungsluft in der katalytischen Oxidationseinheit (20), um inerte Luft zu erzeugen;
Strömenlassen der inerten Luft von der katalytischen Oxidationseinheit zu einer Zuführungsleitung für inerte Luft;
Erkennen einer Konzentration von Sauerstoff in der inerten Luft mit einem Sauerstoffsensor (26);
Steuern des Stroms der Verbrennungsluft und des Kraftstoffs in die katalytische Oxidationseinheit abhängig von der Konzentration von Sauerstoff in der inerten Luft; und
**gekennzeichnet durch**
Steuern des Stroms von einer Verdünnungsluftquelle in die Zuführungsleitung für inerte Luft stromabwärts der katalytischen Oxidationseinheit abhängig von dem Sensorsignal von dem Sauerstoffsensor; und
Lenken der inerten Luft zu einer Position, die Inertisieren erfordert.

9. Verfahren nach Anspruch 8, ferner umfassend das Verdünnen der inerten Luft mit Verdünnungsluft von einer Verdünnungsluftquelle abhängig von der Konzentration von Sauerstoff in der inerten Luft.

10. Verfahren nach Anspruch 8 oder 9, wobei ein Verhältnis von Verbrennungsluft zu dem Kraftstoff, die in die katalytische Oxidationseinheit eintreten, nahezu stöchiometrisch ist.

11. Verfahren nach Anspruch 8, wobei die Verbrennungsluft, die in die katalytische Oxidationseinheit eintritt, im Überschuss ist.

12. Verfahren nach einem der Ansprüche 8 bis 11, ferner umfassend das Anpassen des Sauerstoffgehalts des inerten Gases basierend auf einer Flugphase während des Betriebs eines Luftfahrzeugs.

13. Verfahren nach Anspruch 12, ferner umfassend das Regenerieren eines Katalysators der katalytischen Oxidationseinheit durch Strömenlassen eines sauerstoffhaltigen Gases durch die katalytische Oxidationseinheit

14. Verfahren nach einem der Ansprüche 8 bis 13, ferner umfassend das Regeln der Temperatur der katalytischen Oxidationseinheit durch Strömenlassen von Kühlmedium durch die katalytische Oxidationseinheit, wobei das Kühlmedium von dem Kraftstoff und der Verbrennungsluft getrennt ist, oder ferner umfassend das Regeln der Temperatur der katalytischen Oxidationseinheit durch Verbinden einer Wärmequelle mit der katalytischen Oxidationseinheit.

## Revendications

1. Système d'inertage comprenant :
une source de carburant (14) conçue pour transférer du carburant dans une conduite d'alimentation en carburant (16) ;
une source d'air de combustion (18) conçue pour fournir de l'air de combustion à mélanger avec le carburant ;
une unité d'oxydation catalytique (20) conçue pour recevoir le carburant provenant de la source de carburant et l'air de combustion provenant de la source d'air de combustion, pour convertir le carburant et l'air de combustion en air inerte et pour délivrer l'air inerte à une conduite d'alimentation en air inerte ;
une sonde à oxygène (26) reliée à la conduite d'alimentation en air inerte en aval de l'unité d'oxydation catalytique, la sonde à oxygène étant conçue pour produire un signal de sonde représentant une concentration d'oxygène dans l'air inerte ;
un dispositif de commande (12) conçu pour commander l'écoulement de l'air de combustion et le carburant dans l'unité d'oxydation catalytique en fonction du signal de sonde provenant de la sonde à oxygène représentant la concentration d'oxygène dans l'air inerte dans la conduite d'alimentation en air inerte ; **caractérisé par** :
une source d'air de dilution (22) reliée à la conduite d'alimentation en air inerte en aval de l'unité d'oxydation catalytique, dans lequel le dispositif de commande est conçu pour insérer l'air de dilution provenant de la source d'air de dilution dans l'air inerte en fonction du signal de sonde provenant de la sonde à oxygène ; et
un emplacement nécessitant de l'air inerte en aval de la sonde à oxygène, l'emplacement étant conçu pour recevoir l'air inerte.

2. Système selon la revendication 1, dans lequel un rapport air de combustion/carburant entrant dans l'unité d'oxydation catalytique est presque stœchiométrique.

3. Système selon une quelconque revendication précédente, dans lequel l'air de combustion entrant dans l'unité d'oxydation catalytique (20) est en excès.

4. Système selon la revendication 3, dans lequel un rapport air de combustion/carburant entrant dans l'unité d'oxydation catalytique (20) est à un rapport stœchiométrique relatif oxygène/carburant compris entre 1,5 et 2,0.

5. Système selon une quelconque revendication précédente, dans lequel l'air inerte contient moins de 12 % d'oxygène, et de préférence dans lequel l'air inerte contient moins de 9 % d'oxygène, et de préférence dans lequel l'air inerte a une pression partielle d'oxygène d'au moins 21,3 kPa.

6. Système selon une quelconque revendication précédente, dans lequel l'unité d'oxydation catalytique (20) contient un catalyseur choisi dans le groupe composé de métaux nobles, de métaux de transition, d'oxydes métalliques et de leurs combinaisons, et de préférence dans lequel le catalyseur peut être régénéré en diffusant un gaz contenant une faible concentration d'oxygène à travers l'unité d'oxydation catalytique sans carburant.

7. Système selon une quelconque revendication précédente, comprenant en outre une source de fluide de refroidissement (62) reliée à l'unité d'oxydation catalytique, la source de fluide de refroidissement étant conçue pour réguler la température de l'unité d'oxydation catalytique, ou comprenant en outre une source de chaleur (64) reliée à l'unité d'oxydation catalytique, la source de chaleur étant conçue pour réguler la température de l'unité d'oxydation catalytique.

8. Procédé comprenant :
l'écoulement de carburant d'une source de carburant (14) à une unité d'oxydation catalytique (20) et l'écoulement d'air de combustion depuis une source d'air de combustion (18) dans l'unité d'oxydation catalytique ;
l'oxydation du carburant et de l'air de combustion dans l'unité d'oxydation catalytique (20) pour créer de l'air inerte ;
l'écoulement de l'air inerte de l'unité d'oxydation catalytique à une conduite d'alimentation en air inerte ;
la détection d'une concentration d'oxygène dans l'air inerte avec une sonde à oxygène (26) ;
la commande de l'écoulement de l'air de combustion et du carburant dans l'unité d'oxydation catalytique en fonction de la concentration d'oxygène dans l'air inerte ; et
et **caractérisé par**
la commande de l'écoulement de source d'air de dilution dans la conduite d'alimentation en air inerte en aval de l'unité d'oxydation catalytique, en fonction du signal de sonde provenant de la sonde à oxygène ; et
l'acheminement de l'air inerte jusqu'à un emplacement nécessitant un inertage.

9. Procédé selon la revendication 8, comprenant en outre la dilution de l'air inerte avec de l'air de dilution provenant d'une source d'air de dilution en fonction de la concentration d'oxygène dans l'air inerte.

10. Procédé selon la revendication 8 ou 9, dans lequel un rapport air de combustion/carburant entrant dans l'unité d'oxydation catalytique est presque stœchiométrique.

11. Procédé selon la revendication 8, dans lequel l'air de combustion entrant dans l'unité d'oxydation catalytique est en excès.

12. Procédé selon l'une quelconque des revendications 8 à 11, comprenant en outre l'ajustement de la teneur en gaz inerte-oxygène sur la base d'une phase de vol pendant le fonctionnement d'un aéronef.

13. Procédé selon la revendication 12, comprenant en outre la régénération d'un catalyseur de l'unité d'oxydation catalytique en faisant circuler un gaz contenant de l'oxygène à travers l'unité d'oxydation catalytique.

14. Procédé selon l'une quelconque des revendications 8 à 13, comprenant en outre la régulation de la température de l'unité d'oxydation catalytique en faisant circuler du fluide de refroidissement à travers l'unité d'oxydation catalytique, le fluide de refroidissement étant séparé du carburant et de l'air de combustion, ou comprenant en outre la régulation de la température de l'unité d'oxydation catalytique en reliant une source de chaleur à l'unité d'oxydation catalytique.
